Europäisches Patentamt

European Patent Office

Office européen des brevets

Publication number: **0 383 948**
A1

# EUROPEAN PATENT APPLICATION
## published in accordance with Art. 158(3) EPC

Application number: 89909846.1

Date of filing: 30.08.89

International application number:
PCT/JP89/00885

International publication number:
WO 90/01880 (08.03.90 90/06)

Int. Cl.⁵ **A23L 3/26**

Priority: 30.08.88 JP 213616/88
17.11.88 JP 288857/88

Date of publication of application:
29.08.90 Bulletin 90/35

Designated Contracting States:
**AT BE CH DE FR GB IT LI LU NL SE**

Applicant: **MITSUI TOATSU CHEMICALS INC.**
No. 2-5, Kasumigaseki 3-chome
Chiyoda-Ku Tokyo 100(JP)

Inventor: **HAYAFUNE, Koji**
**1-13-15, Eifuku**
**Suginami-ku Tokyo 168(JP)**
Inventor: **NAEMURA, Shinichi 1-16-5, Nakazato**
**Minami-ku Yokohama-shi**
**Kanagawa-ken 232(JP)**
Inventor: **YASUMOTO, Hiroshige 4-8-13,**
**Shoji-higashi**
**Ikuno-ku Osaka-shi**
**Osaka-fu 544(JP)**
Inventor: **AMEMIYA, Hideo 2882, Iijima-cho**
**Sakae-ku Yokohama-shi**
**Kanagawa-ken 232(JP)**

Representative: **Holdcroft, James Gerald, Dr.**
**et al**
**Graham Watt & Co. Riverhead**
**Sevenoaks Kent TN13 2BN(GB)**

### IMPLEMENT FOR KEEPING FRESHNESS OF FOOD OR WATER.

The invention provides an implement for keeping the freshness of food or water which comprises a resin composition, particularly a hygroscopic resin composition, containing (or coated with) far infrared radiating ceramics.

*FIG. 2*

EP 978

# Device For Maintaining Freshness of Food or Water

## Technical Field

The present invention relates to a device for maintaining freshness of food or water.

## Background Art

In order to maintain the freshness of perishable foods such as vegetables, fruits, dressed meats, fish meats and drinking water, a refrigerator, a freezer, or an open showcase provided with a refrigerator, etc. are widely used in a household, a meat store, a fish store, a supermarket and Sushi Bar, etc.

These foods, in particular fishery products may be extremelylowered in freshness because of raised temperature in the showcase when it is frequently opened and closed. Even if the case is not frequently opened, it is difficult to maintain the freshness of perishable foods, so that they may become untasty within a day.

Thus, the temperature within a showcase should be lowered as lower as possible; as a result, not only the amount of required electric power is increased but also the showcase may be frosted; thus the showcase may become unsatisfactorily functioned as such and will require excess amounts of electric power for defrosting.

This problem will become more serious when the volume in the case or box becomes larger, the maximum cause of which is that it is difficult to make uniform the temperature within the larger case. In order to make uniform the temperature within the case, while it has been proposed to circulate the air within the case, such circulation may cause the foods to be locally dried.

Further when many kinds of foods are mixedly put in the case, the smell of one food may be transferred to another food.

On the other hand, it is known that ceramics consisting of some kinds of metal oxides or mixtures thereof can emit far infrared rays having a wave length greater than 3 microns, in particular, of 4 - 25 microns.

Until now, the far infrared rays emitted by ceramics have been utilized for heating, drying or disinfecting foods in a short wave length area of high temperature. Recently, however, utilization of far infrared rays in a long wave length area at or below the room temperature has been noted: as a result, various products utilizing these ceramics have been proposed in order to maintain the freshness and sanitation of foods.

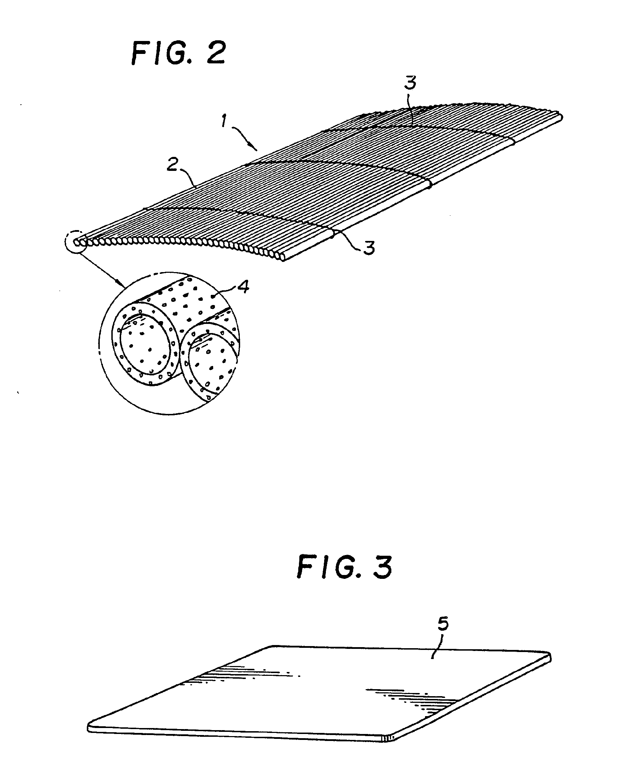

On the other hand, in order to preserve or display various foods, a draining board as shown in Fig. 2, on which the foods are to be put, is widely used in Japan. Such draining board was generally made of bamboos, but recently it is made of plastics. However, such prior art plastic draining boards were not able to be expected to have such effects that the freshness of foods to be kept in cold storage be maintained and a relishable period be extended.

## Disclosure of the Invention

It is an object of the present invention to provide such a device for reserving or displaying foods that the device can maintain the freshness of perishable foods and extend the preservable period or relishable period.

It is another object of the present invention to provide the above kind of device for reserving or displaying foods so as to prevent an offensive smell from being emitted within a refrigerator and so as to prevent the inside wall of the refrigerator from being frosted so that the amount of electric power required by a freezing-preservating system can be reduced.

The above-described objects can be performed by a device for maintaining the freshness of foods, according to the present invention, wherein said device is made from composite materials including resins and ceramics being capable of emitting far infrared rays, preferably said far infrared rays having a wave length not smaller than 3 microns, in particular, of 4 - 25 microns.

In the present specification and claims, the expression "including ceramics" means not only "the resin containing ceramics as a part thereof" but also "the surface of the resin covered or coated by ceramics".

## Brief Description of  Drawings

Fig. 1 is a graph showing an example of spectral radiance/wave length curve obtained by measuring or testing a sheet made from a resin composition used in the present invention.

Fig. 2 is a perspective view showing a draining board of a first embodiment of the present invention.

Fig. 3 is a perspective view showing a sheet, on which foods are to be put, according to a second embodiment of the present invention.

Fig. 4 is a plan view showing a draining board according to the third embodiment of the present invention.

Fig. 5 is a sectional view of Fig. 4.

Fig. 6 is a perspective view showing a tray on which foods are to be put according to a fourth embodiment of the present invention.

Fig. 7 is a perspective view showing an ice freezing receptacle according to the fifth embodiment of the present invention.

Best Mode for carrying out the Invention

Ceramics emitting far infrared rays which may be used in the present invention may be exemplified by impalpable powder ceramics capable of emitting far infrared rays having a wave length of 3 - 25 microns, preferable 4 - 14 microns in used temperature.

Such ceramics comprise an oxide of metal such as aluminum, silicon, titanium, magnesium, zirconium or mixtures thereof.

Besides, resins to be mixed with these ceramics may be of any kind of resins provided that they can be mixed and kneaded with impalpable powder ceramics to be formed to a sheet, a stick or a pipe etc.       These resins may be exemplified by styrene resins, acrylic resins, cellulose resins, polyamide resins, polyolefine resins (for example, polyolefine of polyethylene, polypropylene halogenide polyolefine of polyvinyl chloride), various nylon, urethane, and nitrile resin, etc.  In some cases, heat-resistant resin materials such as aramid resin, polyether-ether-ketone and polyether-sulfone may be used.

It is preferred, however, to use hygroscopic resins having relatively high hygroscopic property such as nitrile resin, nylon, urethane, in particular, hygroscopic resin having water absorption rates of 1 % or more when measured by ASTM D-570 (24 hrs/1/2 inch), and high nitrile resin are particularly preferred.

The high nitrile resins in the present specification and claims mean a copolymer which contains an unsaturated nitrile compound such as acrylonitrile and metacrylonitrile, as a principal component thereof, said copolymer containing said unsaturated nitrile compound in the ratio of 50 % by weight or more, preferably more than 55 % by weight.

A copolymer consisting of the unsaturated nitrile compound and at least one kind of comonomers such as styrene, butadiene, isoprene, methylacrylate, ethylacrylate, methylmetaacrylate, ethylmetaacrylate may be used.

As high nitrile resins, the mixtures may be used, for example, a mixture of a copolymer including unsaturated nitrile compound as a principal component thereof and a rubber-like polymer such as butadiene-acrylonitrile copolymer, butadiene-styrene copolymer, isoprene-styrene copolymer, polybutadiene, and polyisoprene, such that said unsaturated nitrile compound is contained in said mixture in the ratio of 50 % weight or more, or a copolymer obtained by copolymerizing a mixture of the unsaturated nitrile compound with said comonomer under the existence of said rubber like polymer. These resins are highly recommended because of the high shock-resistant property thereof.

These high nitrile resin compositions may include as additives an antioxidant, an ultraviolet rays absorbing agent, an antistatic agent, a lubricant, an inorganic filler, a colored pigment, or a small amount of other resins.

These resin compositions including such ceramics may also be obtained by mixing the ceramics with the high nitrile resin melted by heat rolls, or by kneading through an extruder.

A mixture ration of ceramics to resin may be determined within a range of 5 - 80 % by weight, depending on uses or use conditions. Generally, 10 - 40 % by weight may be adopted but not be limited thereto, and the ratio may be suitably determined depending upon the kinds of used resins, the composition of ceramics, a wavelength of emitted far infrared rays.

Thus obtained resin compositions which include ceramics emitting far infrared rays are formed in a usual manner into a plate, a stick, a filament or fibre, a string, or a pipe, etc., and these are used to form a draining board or receptacle by hand or a mechanical method.

These devices may be used within a receptacle such as a refrigerator as a base member, a side wall, or a partition. In some cases, the devices may be also used as a front door of the refrigerator, a receptacle itself for holding food, or a cover for the receptacle. Further, the devices may be formed into a cage produced by knitting filaments, within which food is to be put.

Further, these devices may be utilized as an ice freezing receptacle, a bottle for drinking water, components of a fish preserve or a water circulation line, and a receptacle for transporting living fishes at low temperature.

Example 1

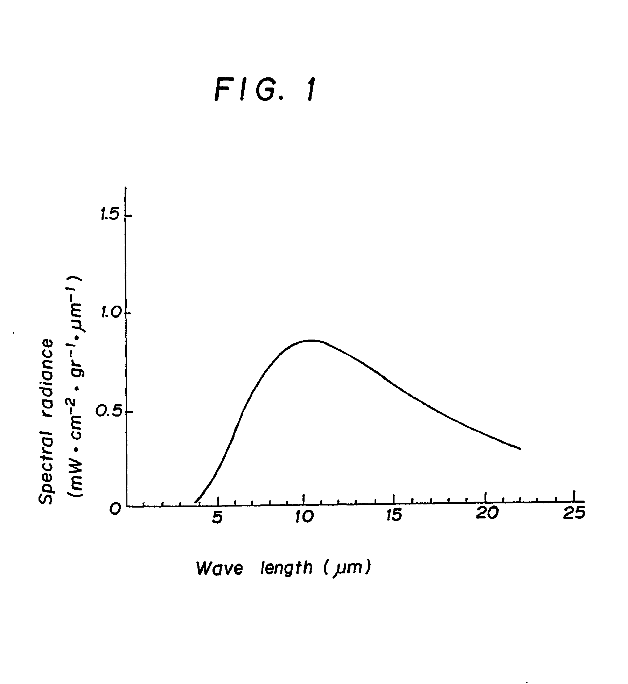

Ceramics, a principal component which consists of aluminum oxide, i.e. powder ceramics SCR3 (produced by SANWA LIFE SERA CO., Ltd. and presented by SANKI BUSSAN CO., Ltd) were blended or added 20 % by weight to one of high nitrile resins, BAREX (a trademark of a product of MITSUI TOATSU CHEMICALS, INC.). This mixture was melted at about 210 ℃ and was mixed and kneaded by means of a biaxial extruder of 30 mm diameter to thereby form the resin composition having characteristics as shown in Fig. 1.

Using this resin composition in a conventional manner, straw-shaped pipes of 8 mm diameter are made, cut to an even length of 20 cm, and knitted to form a draining board 1 having a size of about 20 cm x 30 cm as shown in Fig. 2.

In the drawings, reference numeral 2 denotes an elongated pipe having a wall thickness of 0.5 mm and an outer diameter of 8 mm, reference numeral 3 denotes a knitted cord, and reference numeral 4 denotes powders of ceramics which are kneaded into base resins and are capable of emitting far infrared rays.

Such draining board 1 is widely used as an underlay in order to put fishery products thereon in a super market, a SUSHI BAR, or a show-case of a fresh fish store.

Sensuous Test  1

The draining board made according to Example 1 was put within a showcase of SUSHI BAR and slices of a bluefin for the highest grade of sliced raw fishes were put on said draining board.

First, we had 14 examiners eat and evaluate half of the slices of the bluefin, the result of which exhibits 13 examiners evaluating as the highest rank A and one examiner evaluating as a second rank B with all taste ranks being divided into 5 ranks A, B, C, D, and E.

Next, after 24 hours, we had the same 14 examiners eat and evaluate remaining half of the slices of the bluefin and slices from a new bluefin which has just been gotten in a stock. As a result, all the 14 examiners were not able to distinguish between the former and the latter in any of an external appearance, smell, or taste.

Further, the result of evaluation of the latter by 5 ranks A, B, C, D, and E was the same as in the former.

After further 24 hours, we had 10 examiners randomly selected from the above 14 examiners eat and evaluate the slices.

Eight examiners of them evaluated it as rank A, and 2 examiners evaluated it as rank B.

Sensuous Test 2

A draining board made according to Example 1 was put in a household electric refrigerator and sliced beefs were put on the draining board. When they were inspected after three days, no change was recognized in color or smell thereof. Also after 7 days, no change was recognized in color or smell.

Also after 10 days, no change was recognized in color or smell, and therefore the beefs were baked with ginger to be eaten by the examiners, who were able to enjoy the beefs with the same good taste as in fresh beefs baked with gingers.

Sensuous Test 3

A rice ball was wound by the draining board made according to Example 1 and was preserved at a room temperature (30 °C in summer) for 48 hours. The rice ball did not exhibit any change and was able to be eaten in good taste.

Example 2

A sheet 5 of about 2 mm thickness as shown in Fig. 3 was made from the resin compositions used in Example 1. Using this sheet 5, foods preservation test was performed.

KIBINAGO (one kind of small fishes) which was just landed from the sea, from which the intestine was removed, was cooked, was put on the sheet 5, was wrapped with a paper-towel, and was preserved in a refrigerator, inside temperature of which was 4 °C.

When inspected after 24 hours, no change was exhibited in color, smell, or taste.

Comparison 2

A sheet was made from only resins of Example 2 without adding ceramics powders thereto. Using this sheet, the same test was performed. As a result, it was recognized that the KIBINAGO was discovered, lost the freshness, and spoiled the taste.

Example 3

The same test as in Example 2 was performed except that Nylon-66 resin was used instead of high nitrile resin.

After the fish was preserved for 20 hours, the fish did not exhibit any change in color, smell, or taste.

Comparison 3

A sheet was made from only the same resin i.e. Nylon-66 as in Example 3 without adding ceramic-powders. Using this sheet, the same test as in Example 3 was performed. As a result, it was recognized after 5 hours that the fish was discolored and the freshness was lost.

Example 4

The same test as in Example 2 was performed except that slices of a bonito were used instead of KIBINAGO.

After 7 hours the slices did not change in color. We had 10 examiners eat and evaluate the slices cut 7 hours before and just cut slices and through sensuous comparison test. However, nobody was able to distinguish between the former and the latter.

Comparison 4

The same comparison as in Example 4 test was made using the the sheet without ceramics powders being added thereto.

After 3 hours, the slices of the bonito turned black in color. The functional test of the slices by all the 10 examiners indicated that the taste of just cut slices was superior to said slices cut 3 hours before.

Example 5

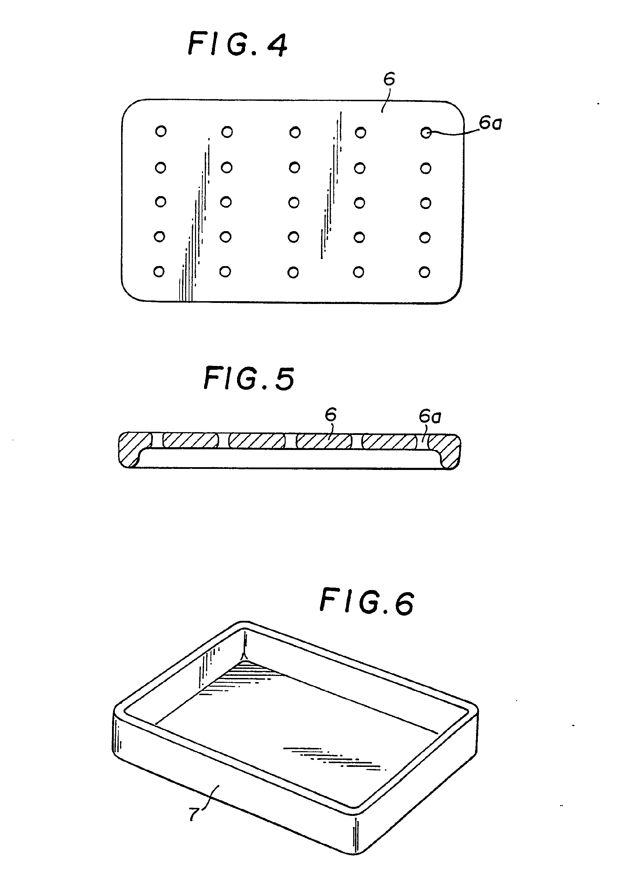

Referring to Fig. 4 and Fig. 5, a solid type of a draining board 6 was shown. This draining board 6 is a rectangular plate which is provided with a plain upper surface, peripheral edges projecting towards an underside, and several perforations 6a passing through said plain upper surface.

Using the same material as in Example 1, the draining board 6 of 30 cm x 50 cm x 2 cm was made and the same test as in Example 2 was performed.

Inspection s of the fish after 24 hours did not exhibit any change of the fish in color, smell, or taste.

Example 6

In Fig. 6, a foods storing tray 7 used within a refrigerator etc. is shown. A tray 7 of 5 cm x 20 cm x 2 cm was made from the same materials as in Example 1, and the similar test as in Example 2 was performed.

Inspection of the fish after 24 hours did not exhibit any change of the fish in color, smell, or taste.

Example 7

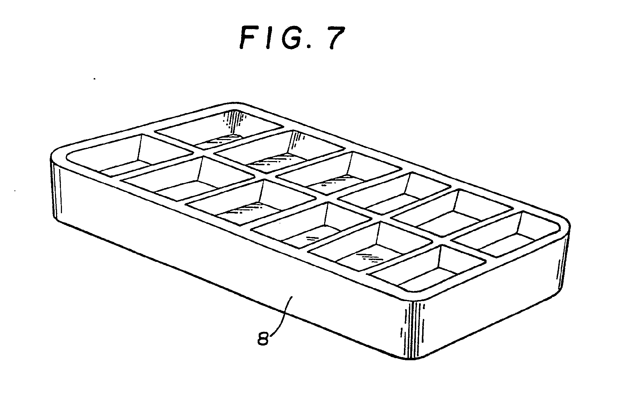

Fig. 7 shows an ice-freezing receptacle 8 to be used in a refrigerator etc.

A sheet of 1 mm thickness was made from the resin composition used in Example 1. Using this sheet, the ice-freezing receptacle 8 having 12 cells of about 2 cm x 2 cm x 2 cm was formed.

Using this receptacle 8, transparent blocks of frozen water with less air bubbles were made in the refrigerator.

Comparison 7

An ice-freezing receptacle 8 was made of a sheet made from only the high nitrile resin without adding ceramics powders.

Using this receptacle 8, the same test as in Example 7 was performed, resulting in slightly opaque or cloudy blocks of frozen water.

Although the above-described examples were referred to a draining board and tray on which perishable foods such as beefs, fishes, meats, or rice balls are to be put, shapes or uses of the device made from the resin compositions including ceramics are not limited to these examples.

The device according to the present invention may be used as a reservoir for holding the drinking water, fruit juice, fruit liquor, or other drinks, as structural elements of a reservoir in which living fishes are to be bred or transported, and as materials for packing agricultural products, forest products, or eggs.

When reserving drinks such as the drinking water or fruit juice, a part of the reservoir such as a lid may be made from the resin compositions, or the reservoir may be covered with a film made from the resin compositions, or a pallet, a sheet, a non-woven fabric, a honeycomb body, a wire cloth, or a small piece made from said resin composition may be put within said reservoir.

Various shapes of a filter, a mesh, a draining board, a small stone piece, a film, a sheet, a non-woven fabric, or a honeycomb body may be made from the said resin composition, and these may be put on the bottom surface of a fish preserve for living fishes, be filled within a water circulation line, or be suspended within a water reservoir.

When living crabs, lobsters, and prawns etc. within a low temperature reservoir are transported, it is recommended to utilize a partition or a mesh made from said resin composition in order to restrict their free movement.

When landed marine products are transported, a device made from said resin composition may be used as a liner of an internal surface of a corrugated cardboard box or a foam styrene box, or as partition, or small pieces of said device may be mixed with blocks of ice within the boxes.

In order to preserve or transport grains, vegetables, fruits, petals, seeds and saplings, eggs, etc., the device may be used as a wrapping box or bag, in addition, or may be utilized as a packing or a partition within a corrugated cardboard box.

## Industrial Applicability

A device made from resin compositions including ceramics emitting far infrared rays can maintain freshness of food or water for a considerable period of time since the function of the far infrared rays by the ceramics can be sufficiently utilized without injuring the property of the resin.

A high nitrile resin, in particular, is superior in gas barrier property, and thus may be used for a food package, for example, a gas charged package in combination with freshness maintaining effect of the far infrared rays, or a deoxidized package in combination with oxygen scavengers.

The present invention can be utilized for maintaining freshness of not only food but also drinking water, or fish reserving water.

What is claimed is:

1. A device for maintaining freshness of foods or water wherein said device was made from resin compositions including ceramics emitting far infrared rays.

2. A device for maintaining freshness of foods or water or the like as defined in claim 1, wherein said resin is at least one resin selected from a group consisting of styrene resin, acrylic resin, cellulose resin, polyamide resin, polyolefine resin, nylon, urethane resin, and nitrile resin.

3. A device for maintaining freshness of foods or water as defined in claim 1, wherein said resin is at least one heat-resistant resin selected from a group consisting of aramid resin, polyether-ether-ketone, and polyether-sulfone.

4. A device for maintaining freshness of food or water as defined in claim 1, wherein said resin is a hygroscopic resin having a water absorption rate not less than 0.1 % when measured by ASTM D-570.

5. A device for maintaining freshness of food or water as defined in claim 4, wherein said hygroscopic resin is at least one resin selected from a group consisting of a high nitrile resin, nitrile copolymers, polymethyl-meta-acrylate, polyphenyl-sulfone, polycarbonate, polyacetal, nylon-6, nylon-66, polyethylene-terephthalate, poly vinyl chloride resin, and urethane resin.

— 1 4 —

6. A device for maintaining freshness of foods or water as defined in claim 5, wherein said hygroscopic resin is a high nitrile resin.

7. A device for maintaining freshness of food or water as defined in claim 6, wherein said high nitrile resin is a copolymer including an unsaturated nitrile compound at the rate of 50 % or more by weight.

8. A device for maintaining freshness of foods or water as defined in claim 6, wherein said high nitrile resin is a copolymer of an unsaturated nitryle compound with at least one monomer selected from a group consisting of styrene, butadiene, isoprene, methylacrylate, ethylacrylate, methylmetaacrylate, and ethylmetaacrylate.

9. A device for maintaining freshness of foods or water as defined in claim 6, wherein said high nitrile resin is a mixture of: at least one rubber-like polymer selected from a group consisting of butadiene-acrylonitrile copolymer, butadiene-styrene copolymer, isoprene-styrene copolymer, polybutadiene, and polyisoprene and a copolymer, a principal component of which is an unsaturated nitrile compound.

10. A device for maintaining freshness of food or water as defined in claim 6, wherein said high nitrile resin is a copolymer obtained by copolymerizing:

(A) at least one monomer selected from a group consisting of styrene, butadiene, isoprene, methylacrylate, ethylacrylate, m ethylmetacrylate, and ethylmetaacrylate; and

(B) An unsaturated nitrile compound; under existence of at least one rubber-like polymer selected from a group consisting of butadiene-acrylonitrile copolymer, butadiene-styrene copolymer, isoprene-styrene copolymer, polybutadiene, and polyisoprene.

11. A device as defined in claim 1, wherein said device is a draining board on which food is put.

12. A device as defined in claim 1, wherein said device is a simple plate on which food is put.

13. A device as defined in claim 1, wherein said device is a dish on which food is put.

14. A device as defined in claim 1, wherein said device is a tray on which food is put.

15. A device as defined in claim 1, wherein said device is a receptacle, within which food is put.

16. A device as defined in claim 15, wherein said device is a box.

17. A device as defined in claim 15, wherein said device is a bottle.

18.    A device as defined in claim 15, wherein said device is a bag.

19.    A device as defined in claim 1, wherein said device is a film which is adapted to wrap articles to be preserved.

20.    A device as defined in claim 1, wherein said device is an ice freezing receptacle which is used in a refrigerator.

21.    A device as defined in claim 1, wherein said device is a woven fabric.

22.    A device as defined in claim 1, wherein said device is a non woven fabric.

23.    A device as defined in claim 1, wherein said device is a filter material.

24.    A device as defined in claim 1, wherein said device is a pallet.

25.    A device as defined in claim 1, wherein said device is a packing material to be used as a package for foods.

26.    A device as defined in claim 1, wherein said device is a small piece of a predetermined shape.

27.    A device as defined in claim 1, wherein said device is a small piece of an indefinite shape.

28.    A device as defined in claim 1, wherein said device is formed as a plate.

29.    A device defined in claim 1, wherein said device is formed as a film.

30.    A device defined in claim 1, wherein said device is formed as a net or fabric.

31.    A device defined in claim 1, wherein said device is formed as a stick or bar.

32.    A device defined in claim 1, wherein said device is formed as a pipe.

33.    A device defined in claim 1, wherein said device is formed as a honeycomb body.

# FIG. 1

# FIG. 2

# FIG. 3

# FIG. 4

# FIG.5

# FIG.6

# FIG. 7

8

# INTERNATIONAL SEARCH REPORT

International Application No PCT/JP89/00885

| I. CLASSIFICATION OF SUBJECT MATTER (if several classification symbols apply, indicate all) 6 |
|---|

According to International Patent Classification (IPC) or to both National Classification and IPC

Int. Cl$^4$     A23L3/26

## II. FIELDS SEARCHED

### Minimum Documentation Searched 7

| Classification System | Classification Symbols |
|---|---|
| IPC | A23L3/26, A23B4/00, 7/00, C02F1/30, C08K3/00, 3/22 |

Documentation Searched other than Minimum Documentation
to the Extent that such Documents are Included in the Fields Searched 8

| | |
|---|---|
| Jitsuyo Shinan Koho | 1926 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 63-137962 (Mitsui Toatsu Chemicals, Inc.) 9 June 1988 (09. 06. 88) | 1, 2 |
| X | JP, A, 63-132963 (Akatsuka Kouji) 4 June 1988 (04. 06. 88) | 1, 15, 18 |
| X | JP, U, 62-130791 (Inui Yasuhiro) 18 August 1987 (18. 08. 87) | 1, 15, 16 |
| Y | JP, A, 60-155267 (Matsushita Electric Industrial Co., Ltd.) 15 August 1985 (15. 08. 85) (Family : none) | 1, 2, 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 28, 1989 (28. 11. 89) | December 11, 1989 (11. 12. 89) |

| International Searching Authority | Signature of Authorized Officer |
|---|---|
| Japanese Patent Office | |

Form PCT/ISA/210 (second sheet) (January 1985)